(19) **Europäisches Patentamt European Patent Office Office européen des brevets**

(11) **EP 4 513 580 A1**

(12) **EUROPEAN PATENT APPLICATION**
published in accordance with Art. 153(4) EPC

(43) Date of publication:
**26.02.2025  Bulletin 2025/09**

(21) Application number: **23792218.2**

(22) Date of filing: **20.04.2023**

(51) International Patent Classification (IPC):
$H01M\ 4/04$ (2006.01)  $H01M\ 4/13$ (2010.01)
$H01M\ 4/62$ (2006.01)  $H01M\ 4/66$ (2006.01)
$H01M\ 4/139$ (2010.01)  $H01M\ 10/052$ (2010.01)
$H01M\ 4/02$ (2006.01)

(52) Cooperative Patent Classification (CPC):
**H01M 4/02; H01M 4/04; H01M 4/13; H01M 4/139;
H01M 4/62; H01M 4/66; H01M 10/052;** Y02E 60/10

(86) International application number:
**PCT/KR2023/005411**

(87) International publication number:
**WO 2023/204644 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.04.2022  KR 20220049198**

(71) Applicant: **LG Energy Solution, Ltd.
Seoul 07335 (KR)**

(72) Inventors:
• **KWAK, Sang-Min
Daejeon 34122 (KR)**
• **LEE, Ki-Seok
Daejeon 34122 (KR)**

• **LEE, Ho-Chan
Daejeon 34122 (KR)**
• **KANG, Seong-Wook
Daejeon 34122 (KR)**
• **YOON, Kyung-Hwan
Daejeon 34122 (KR)**
• **LEE, Nam-Jeong
Daejeon 34122 (KR)**
• **HAN, Jae-Sung
Daejeon 34122 (KR)**
• **PARK, Moon-Soo
Daejeon 34122 (KR)**

(74) Representative: **Plasseraud IP
104 Rue de Richelieu
CS92104
75080 Paris Cedex 02 (FR)**

(54) **ELECTRODE FOR ELECTROCHEMICAL DEVICE**

(57)  The present disclosure relates to an electrode for an electrochemical device, and more particularly, to a dry electrode and a method for manufacturing the same. According to an aspect of the present disclosure, there is provided a new method for manufacturing a dry electrode free of wrinkles in an uncoated portion having no electrode active material layer on a current collector.

**EP 4 513 580 A1**

**(Cont. next page)**

FIG. 5

**Description**

TECHNICAL FIELD

The present disclosure relates to an electrode for an electrochemical device, and more particularly, to a dry electrode and a method for manufacturing the same.

The present application claims priority to Korean Patent Application No. 10-2022-0049198 filed on April 20, 2022 in the Republic of Korea, the disclosures of which are incorporated herein by reference.

BACKGROUND ART

Due to the increasing use of fossil fuels, there is a growing demand for the use of alternative energy and clean energy, and in such circumstances, many studies are being made in the field of energy generation and storage using electrochemistry.

Currently, a typical example of electrochemical devices using electrical and chemical energy is secondary batteries, and the range of application of secondary batteries is gradually expanding.

One of typical secondary batteries, lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and the range of application of lithium secondary batteries is expanding to an auxiliary power source through a grid.

A process of manufacturing a lithium secondary battery largely includes three steps: an electrode process, an assembly process and an aging process. The electrode process includes an active material mixing process, an electrode coating process, a drying process, a rolling process, a slitting process and a winding process.

The active material mixing process is a process of mixing coating materials for forming an electrode active layer in which electrochemical reaction occurs in the electrode, and specifically, an electrode active material which is the essential element of the electrode is mixed with an additive such as a conductive material, fillers, a binder for binding powder and adhering to a current collector, and a solvent for making viscous and dispersing power to prepare a flowable slurry.

The mixture composition for forming the electrode active layer is referred to as an electrode mixture in a broad sense.

Subsequently, the electrode coating process of coating the electrode mixture on an electrically conductive current collector and the drying process for removing a solvent from the electrode mixture are performed, followed by rolling, to manufacture the electrode with a predetermined thickness.

Meanwhile, defects such as pinholes or cracks may occur in the already formed electrode active layer due to evaporation of the solvent contained in the electrode mixture during the drying. Additionally, the active layer is not uniformly dried all over the entire region, and due to a difference in solvent evaporation rate, some regions get dried earlier and powder at the corresponding regions float, and some other regions get dried later, resulting in low quality of the electrode.

As opposed to electrodes using solvents (referred to as wet electrodes), recently, many studies are being made to manufacture electrodes without solvents (referred to as dry electrodes).

In general, a dry electrode is manufactured by laminating an electrode film comprising an active material and a binder onto a current collector. During the process, a high shear mixing process such as jet-milling is performed to fibrillate the binder, and in this instance, when the high shear mixing process is applied to the fragile active material, fine particles of small size are produced in large amounts, which may degrade the mechanical performance or the electrical and chemical performance, and in case that high shear mixing is too much, the produced binder fibers are broken, which makes the electrode film less flexible. Additionally, the constituent components are attached to the inside of the equipment during the jet-milling and a flow of high pressure air is disturbed, resulting in clogged channels, and it is not favorable for mass production.

Additionally, it is necessary to increase the density of the electrode film to laminate the electrode film onto the current collector, and high pressure is used for adhesion of the electrode film to the current collector in the process. In the course of this process, expansion occurs in an area of the current collector (a coated portion) where the electrode film is laminated, while expansion does not occur in an area of the current collector (an uncoated portion) where the electrode film is not laminated, causing wrinkles, creases or waves at or near the boundary between the coated portion and the uncoated portion.

To solve this problem, there is an urgent need for the development of new technology to manufacture dry electrodes.

## DISCLOSURE

### Technical Problem

The present disclosure is directed to providing an electrode free of wrinkles at the boundary between an area having an electrode active material layer (a coated portion) and an area having no electrode active material layer (an uncoated portion) on a current collector and a method for manufacturing the same.

The present disclosure is further directed to providing a method for manufacturing an electrode with improved flexibility and mechanical properties by minimized granulation of an active material and maximized fibrillation of a binder.

### Technical Solution

To solve the above-described problem, according to an aspect of the present disclosure, there is provided a method for manufacturing an electrode of the following embodiments.

The method for manufacturing the electrode according to a first embodiment of the present disclosure comprises (S10) mixing an electrode material comprising an electrode active material and a binder polymer to obtain a mixture; (S20) kneading the mixture at high temperature low shear to obtain a mass of mixture; (S30) pulverizing the mass of mixture at high shear to obtain an electrode mixture powder; (S40) calendaring the electrode mixture powder to obtain an electrode film; and (S50) laminating the electrode film onto at least one surface of a current collector to form an electrode active material layer, wherein a compression ratio of the electrode film is 15% or less, and the compression ratio of the electrode film is defined by the following Equation 1.

$$[\text{Equation 1}]$$

$$\text{Compression ratio } (\%) = [(T_B - T_{A)} / T_B] * 100$$

wherein in the above Equation 1,
$T_A$ denotes a thickness of the electrode film (the electrode active material layer) after the lamination, and
$T_B$ denote a thickness of the electrode film before the lamination.

According to a second embodiment of the present disclosure, in the first embodiment, a length expansion ratio of the electrode film may be 4% or less. The length expansion ratio may be defined by the following Equation 2.

$$[\text{Equation 2}]$$

$$\text{Length expansion ratio } (\%) = [(L_A - L_B)/L_B] * 100$$

wherein in the above Equation 2,
$L_A$ denotes a length of the electrode film (the electrode active material layer) after the lamination, and
$L_B$ denotes a length of the electrode film before the lamination.

According to a third embodiment of the present disclosure, in the first or second embodiment, a porosity ratio of the electrode film may be 100% to 140%, and the porosity ratio of the electrode film may be defined by the following Equation 3.

$$[\text{Equation 3}]$$

$$\text{Porosity ratio } (\%) = (P_B / P_A) * 100$$

wherein in the above Equation 3,
$P_A$ denotes a porosity of the electrode film (the electrode active material layer) after the lamination, and
$P_B$ denotes a porosity of the electrode film before the lamination.

According to a fourth embodiment of the present disclosure, in any one of the first to third embodiments, a porosity of the electrode film before the lamination of the step (S50) may be 35 vol% or less, and a porosity of the electrode film after the lamination may be 30 vol% or less.

According to a fifth embodiment of the present disclosure, in any one of the first to fourth embodiments, the calendaring of the step (S40) may be performed one time, or two or more times, and a number of times the calendaring is performed under a pressure of 100 kg/cm or more may include at least one.

According to a sixth embodiment of the present disclosure, in any one of the first to fifth embodiments, the kneading of the step (S20) may be performed at a shear rate in a range between 10/s and 500/s for 1 minute to 30 minutes.

According to a seventh embodiment of the present disclosure, in any one of the first to sixth embodiments, the kneading of the step (S20) may be performed in a range between 70°C and 200°C under a pressure which is equal to or higher than atmospheric pressure.

According to an eighth embodiment of the present disclosure, in any one of the first to seventh embodiments, the method for manufacturing the electrode may further comprise, before the lamination of the step (S50), forming a primer layer on the at least one surface of the current collector.

According to another aspect of the present disclosure, there is provided an electrode of the following embodiments.

The electrode according to a ninth embodiment of the present disclosure comprises a current collector; and an electrode active material layer disposed on at least one surface of the current collector, and comprising an electrode active material, and a binder polymer, wherein the binder polymer is fibrillated to bind the electrode active material, the electrode comprises a coated portion having the electrode active material layer and a current collector area in contact with the electrode active material layer; and an uncoated portion including a current collector area which is extended from two sides of the current collector area of the coated portion and is in noncontact with the electrode active material layer, a porosity of the electrode active material layer is 30 vol% or less, and a surface of the uncoated portion is flat.

According to a tenth embodiment of the present disclosure, in the ninth embodiment, the electrode may further comprise a primer layer between the current collector and the electrode active material layer.

According to still another aspect of the present disclosure, there is provided an electrochemical device of the following embodiments.

The electrochemical device according to an eleventh embodiment of the present disclosure comprises a positive electrode; a negative electrode; and a separation layer interposed between the positive electrode and the negative electrode, wherein at least one of the positive electrode or the negative electrode is defined in the ninth or tenth embodiment.

According to a twelfth embodiment of the present disclosure, in the eleventh embodiment, the separation layer may be a separator or a solid electrolyte membrane.

Advantageous Effects

According to an embodiment of the present disclosure, it may be possible to provide the electrode free of wrinkles at the area having no electrode active material layer on the current collector (the uncoated portion), and the method for manufacturing the same. In particular, it may be possible to provide the electrode having the flat uncoated portion by preventing wrinkles at the boundary between the coated portion having the electrode active material layer and the uncoated portion having no electrode active material layer on the current collector, and the method for manufacturing the same.

According to an embodiment of the present disclosure, the introduction of pulverization after high temperature low shear kneading rather than high shear mixing may provide the dry electrode in which the granulation of the active material is minimized, the fibrillation of the binder is maximized and the breakage of the fibrillated binder is minimized.

Further, kneading through the kneader and pulverization rather than high shear jet-milling may prevent the clogged channels caused by the agglomeration of the constituent components, and it is favorable for mass production.

DESCRIPTION OF DRAWINGS

The accompanying drawings illustrate an exemplary embodiment of the present disclosure and together with the foregoing disclosure, serve to provide a further understanding of the technical aspect of the present disclosure, and thus the present disclosure is not construed as being limited to the drawings.

FIG. 1 is a diagram of a process of manufacturing a mixture film according to an embodiment of the present disclosure.
FIG. 2 is a diagram of a process of manufacturing a mixture film according to an embodiment of the present disclosure.
FIG. 3 is a diagram of an electrode lamination process according to an embodiment of the present disclosure.
FIGS. 4a and 4b are top (FIG. 4a) and side view images (FIG. 4b) of an electrode having a nonflat surface of an uncoated portion.
FIG. 5 is an image showing an appearance of each electrode manufactured according to example 1 and comparative examples 1 to 3 in the disclosure. In FIG. 5, an uncoated portion and a coated portion of the electrode are shown.

BEST MODE

Hereinafter, the present disclosure will be described in detail.

The present disclosure relates to a method for manufacturing a dry electrode and a dry electrode, the method comprising pressing an electrode mixture powder to make an electrode film, and laminating the electrode film onto a current collector.

As used herein, the 'electrode film' refers to a free standing type sheet made using an electrode material comprising an electrode active material and a binder without a solvent. In the present disclosure, the term 'free-standing' refers to standing alone without being supported by another object and able to exist or move on its own. Additionally, in the present disclosure, the electrode film may be referred to as 'a dry electrode film' since it is made without a solvent.

In the present disclosure, the electrode film may be formed by compressing the electrode mixture powder as described below. For example, the electrode film may have a layered structure formed by compaction of the mixture powder by compression. The electrode mixture powder is the electrode material in powder form comprising the electrode active material and the binder polymer, and for example, may be obtained by pulverizing a mass of mixture comprising the electrode active material and the binder polymer as described below.

In the present disclosure, one electrode film may constitute an electrode active material layer. Alternatively, the electrode active material layer may include a stack of unit electrode films, each unit electrode film being an electrode film. The electrode active material layer of the present disclosure is not limited to a particular type, and may include those having a sheet shape having a predetermined thickness by compression of the electrode mixture powder.

According to an aspect of the present disclosure, there is provided a method for manufacturing an electrode, comprising:

(S10) mixing an electrode material comprising an electrode active material and a binder polymer to obtain a mixture;
(S20) kneading the mixture at high temperature low shear to obtain a mass of mixture;
(S30) pulverizing the mass of mixture at high shear to obtain an electrode mixture powder;
(S40) calendaring the electrode mixture powder to obtain an electrode film; and
(S50) laminating the electrode film onto at least one surface of a current collector to form an electrode active material layer.

In the method for manufacturing the electrode, a compression ratio of the electrode film according to the following Equation 1 is 15% or less.

[Equation 1]

$$\text{Compression ratio} (\%) = [(T_B - T_A) / T_B] * 100$$

In the above Equation 1,

$T_A$ denotes the thickness of the electrode film (the electrode active material layer) after lamination, and
$T_B$ denotes the thickness of the electrode film before lamination.

According to the existing process of manufacturing a dry electrode, when pressure is applied for adhesion of the current collector and the electrode film in the lamination step, there is a problem with a shape change of the current collector due to partial expansion or non-expansion of the current collector.

To address the problem, the inventors found that in the lamination process in the process of manufacturing the dry electrode, the shape change problem of the current collector may be solved according to the compression ratio of the electrode film by the lamination, thereby manufacturing the electrode having the flat uncoated portion on the current collector, and completed the present disclosure.

Additionally, the inventors also found that in the lamination process in the process of manufacturing the dry electrode, the flatness of the uncoated portion may be further improved according to the compression ratio as well as a change in length of the electrode film before and after lamination.

Moreover, the inventors also found that in the lamination process in the process of manufacturing the dry electrode, the shape change problem of the current collector may be further solved according to a porosity ratio before and after lamination.

Further, the inventors also found that in the lamination process of the process of manufacturing the dry electrode, the flatness of the uncoated portion may be further improved by controlling each of the porosity of the electrode film before lamination and the porosity of the electrode film after lamination.

As used herein, the 'electrode film before lamination' and 'electrode film after lamination' refer to the electrode film before and after the lamination process in (S50), respectively, used to evaluate the properties. Accordingly, the "electrode film before lamination" may be the electrode film immediately before lamination, and according to an embodiment of the present disclosure, may be the electrode film obtained in the step (S40). Additionally, the "electrode film after lamination" may be the electrode film immediately after lamination, and according to an embodiment of the present disclosure, may be the electrode active material layer obtained in the step (S50).

As used herein, the 'coated portion' refers to an area having the electrode active material layer (or referred to as the electrode film) on the at least one surface of the current collector. In other words, the coated portion may refer to the electrode active material layer and a current collector area in contact with the electrode active material layer. Additionally, the 'uncoated portion' refers to an area other than the coated portion, i.e., an area of the current collector in which the electrode active material layer is not present. In other words, the uncoated portion refers to an area of the current collector that is extended from two sides of the current collector area of the coated portion and is in noncontact with the electrode active material layer.

In the present disclosure, as described above, the compression ratio according to the following Equation 1 is 15% or less.

[Equation 1]

$$\text{Compression ratio } (\%) = [(T_B - T_A) / T_B] * 100$$

in the above Equation 1,

$T_A$ denotes the thickness of the electrode film (the electrode active material layer) after lamination, and
$T_B$ denotes the thickness of the electrode film before lamination.

In the present disclosure, the compression ratio of the electrode film may be defined as a ratio of thickness reduction by compression of the electrode film at the moment of lamination to laminate the electrode film onto the current collector, and may be defined by the above Equation 1.

In the present disclosure, the compression ratio of the electrode film may be 15% or less, for example, 10% or less, 5% or less, or 2% or less. For example, the compression ratio may be 0.1% to 15%, 1% to 12%, 1% to 10%, 1% to 5%, or 1% to 2%. In the present disclosure, since the electrode film is compacted after the lamination process for manufacturing the electrode, the thickness becomes smaller than the thickness before lamination. Accordingly, the large compression ratio may represent that the degree of compaction of the electrode film is large and accordingly the pressure applied to the electrode and the current collector is high. Accordingly, great expansion may occur in the area of the current collector where the electrode film is laminated, i.e., the coated portion, causing deformation of the uncoated portion of the current collector. Additionally, the small compression ratio may represent that the degree of compaction of the electrode film is small and accordingly the pressure applied to the electrode and the current collector is low. In this case, the adhesion strength between the electrode and the current collector may be low. When the compression ratio according to the above Equation 1 is in the above-described range, the present disclosure may minimize the shape deformation of the current collector and ensure high adhesion strength between the electrode and the current collector. However, the mechanism of the present disclosure is not limited thereto.

In the present disclosure, unless defined otherwise, the thickness of the electrode film may be measured through known means for measuring the thickness of each component in the corresponding technical field, for example, a thickness measurement instrument, SEM imaging. In an embodiment of the present disclosure, the thickness of the electrode film may be measured using a thickness measurement instrument (Mitutoyo, VL-50S-B), but is not limited thereto.

In an embodiment of the present disclosure, a length expansion ratio of the electrode film before and after lamination according to the following Equation 2 may be 4% or less.

[Equation 2]

$$\text{Length expansion ratio } (\%) = [(L_A - L_B)/L_B] * 100$$

in the above Equation 2,

$L_A$ denotes the length of the electrode film after lamination, and
$L_B$ denotes the length of the electrode film before lamination.

In an embodiment of the present disclosure, in case that the compression ratio by the lamination is outside of the above-described range, a length change of the electrode film before and after lamination is large, causing a shape change of the current collector. Accordingly, according to an embodiment of the present disclosure, the length expansion ratio of the electrode film may be 4% or less, for example, 3% or less, 2% or less, 1.5% or less, 1% or less, 0.5% or less or 0% (i.e., no length change). For example, the length expansion ratio of the electrode film may be 0.1% to 4%, 0.1% to 3%, 0.1% to 2%, 0.1% to 1%, or 0.1% to 0.5%.

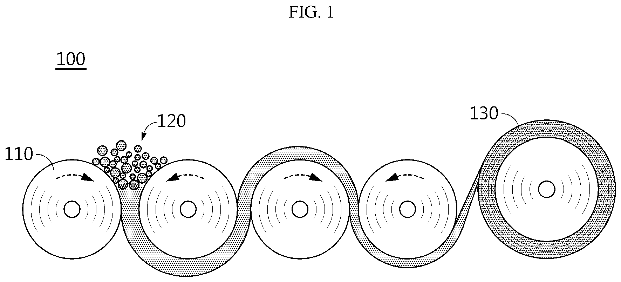

In the present disclosure, unless defined otherwise, the length of the electrode film may be the length measured in the machine direction (MD) of the electrode film. The 'machine direction of the electrode film' refers to the production direction of the electrode film in the process of making the electrode film. FIG. 1 is a diagram showing the process of making the electrode film by calendaring the electrode mixture powder according to an embodiment of the present disclosure. Referring to FIG. 1, when the electrode mixture powder 120 is fed in between a plurality of calendaring rolls 110, the electrode film 130 is formed along a direction. In this instance, the running direction of the electrode film may be defined as the machine direction (MD) of the electrode film.

Since the machine direction (MD) of the electrode film matches the orientation direction of the fibers in the electrode film, the machine direction of the electrode film may be identified through the orientation direction of the fibers in the film. For example, the machine direction of the electrode film may be identified through a scanning electron microscopy (SEM) image of the electrode film. The orientation direction of the fibers identified through the SEM image may match the machine direction (MD) of each unit electrode film.

In the present disclosure, as described above, the electrode active material layer may have a sheet shape having a predetermined thickness by thermal compression of at least one electrode mixture powder comprising the electrode active material and the binder polymer. Accordingly, the electrode active material layer may comprise a plurality of pores in the structure according to the properties of the electrode mixture powder, the tap density or the like, and accordingly the electrode active material layer has porosity in a predetermined range.

In the present disclosure, unless defined otherwise, the porosity may be calculated by measuring the apparent density of only the electrode film by subtracting the volume and weight of the current collector from the volume and weight of the electrode, and calculating by the following relationship equation using the actual density calculated based on the actual density and composition of each component.

$$\text{Porosity }(\%) = \{1 - (\text{apparent density/actual density})\} \times 100$$

In an embodiment of the present disclosure, the porosity ratio of the electrode film before and after lamination may be 100% to 140%, and the porosity ratio of the electrode film may be defined by the following Equation 3.

[Equation 3]

$$\text{Porosity ratio }(\%) = (P_B / P_A) * 100$$

in the above Equation 3,

$P_A$ denotes the porosity of the electrode film (the electrode active material layer) after lamination, and
$P_B$ denotes the porosity of the electrode film before lamination.

In an embodiment of the present disclosure, the porosity ratio of the electrode film before and after lamination according to the above Equation 3 may be 100% to 140%, for example, 100% to 130%, 100% to 125%, 100% to 120%, 100% to 110%, or 100% to 105%. In an embodiment of the present disclosure, when the porosity ratio of the electrode film before and after lamination is adjusted to the specific range in the lamination step of the step (S50), it may be possible to suppress the shape deformation of the current collector after lamination and improve the adhesion strength between the electrode film and the current collector, but the present disclosure is not limited thereto.

In an embodiment of the present disclosure, within the above-described range of the porosity ratio of the electrode film before and after lamination, the porosity of the electrode film before lamination of the step (S50) may be 35 vol% or less, for example, 15 vol% to 35 vol%, 20 vol% to 35 vol%, 20 vol% to 33 vol%, 30 vol% to 35 vol%, 20 vol% to 30 vol%, 20 vol% to 25 vol%, or 30 vol% to 33 vol%, but is not limited thereto.

In another embodiment of the present disclosure, within the above-described range of the porosity ratio of the electrode film before and after lamination, the porosity of the electrode film after lamination of the step (S50) may be 30 vol% or less, for example, 20vol% to 30vol%, 22vol% to 28vol%, or 23vol% to 26vol%, but is not limited thereto.

In still another embodiment of the present disclosure, within the above-described range of the porosity ratio of the electrode film before and after lamination, the porosity of the electrode film before lamination of the step (S50) may be 35 vol% or less, and the porosity of the electrode film after lamination may be 30 vol% or less.

In an embodiment of the present disclosure, when each of the porosity of the electrode film before lamination of the step (S50) and the porosity of the electrode film after lamination of the step (S50) satisfies the above-described range, it may be possible to ensure flatness of the uncoated portion of the electrode and adhesion strength between the electrode and the current collector, but the present disclosure is not limited thereto.

In an embodiment of the present disclosure, when the porosity of the electrode film before lamination is as low as the target porosity level of the electrode film after lamination, the porosity ratio before and after lamination becomes low and it may be more favorable for the flatness of the uncoated portion, but the present disclosure is not limited thereto.

Below is a detailed description of each step of the method for manufacturing the electrode free of wrinkles in the uncoated portion, satisfying at least one condition of the compression ratio, the length expansion ratio or the porosity ratio before and after lamination as described above in the lamination process of the step (S50).

First, the step (S10) is the step of obtaining the electrode material mixture by mixing the electrode material to obtain the electrode mixture powder used to make the electrode film.

The electrode material comprises the electrode active material and the binder polymer.

The electrode active material may be a positive or negative electrode active material depending on the polarity of the electrode to be manufactured.

In an embodiment of the present disclosure, in case that the electrode is used as a positive electrode, the electrode active material may be a positive electrode active material. The positive electrode active material may comprise, for example, at least one of lithium transition metal oxide; lithium metal ferrophosphate; lithium nickel-manganese-cobalt oxide; or lithium nickel-manganese-cobalt oxide with partial substitution by other transition metal, but is not limited thereto. Specifically, the positive electrode active material may include, for example, layered compounds such as lithium cobalt oxide ($LiCoO_2$), lithium nickel oxide ($LiNiO_2$) or compounds with one or more transition metal substitution; lithium manganese oxide such as formula $Li_{1+x}Mn_{2-x}O_4$ (where x is 0 to 0.33), $LiMnO_3$, $LiMn_2O_3$, $LiMnO_2$; lithium copper oxide ($Li_2CuO_2$); vanadium oxide such as $LiV_3O_8$, $LiV_3O_4$, $V_2O_5$, $Cu_2V_2O_7$; Ni site type lithium nickel oxide represented by formula $LiNi_{1-x}M_xO_2$ (where M = Co, Mn, Al, Cu, Fe, Mg, B or Ga, x = 0.01 to 0.3); lithium manganese composite oxide represented by formula $LiMn_{2-x}M_xO_2$ (where M = Co, Ni, Fe, Cr, Zn or Ta, x = 0.01 to 0.1) or $Li_2Mn_3MO_8$ (where M = Fe, Co, Ni, Cu or Zn); lithium metal ferrophosphate $LiMPO_4$ (where M = Fe, CO, Ni, or Mn); lithium nickel-manganese-cobalt oxide $Li_{1+x}(Ni_aCo_bMn_c)_{1-x}O_2$ (x = 0 to 0.03, a = 0.3 to 0.95, b = 0.01 to 0.35, c = 0.01 to 0.5, a+b+c=1); lithium nickel-manganese-cobalt oxide with partial substitution by aluminum such as $Li_a[Ni_bCo_cMn_dAl_e]_{1-f}M1_fO_2$ (M1 is at least one selected from the group consisting of Zr, B, W, Mg, Ce, Hf, Ta, La, Ti, Sr, Ba, F, P and S, $0.8{\le}a{\le}1.2$, $0.5{\le}b{\le}0.99$, $0<c<0.5$, $0<d<0.5$, $0.01{\le}e{\le}0.1$, $0{\le}f{\le}0.1$); lithium nickel-manganese-cobalt oxide with partial substitution by other transition metal such as $Li_{1+x}(Ni_aCo_bMn_cM_d)_{1-x}O_2$ (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; $Fe_2(MoO_4)_3$, but is not limited thereto.

In another embodiment of the present disclosure, in case that the electrode is used as a negative electrode, the electrode active material may be a negative electrode active material. The negative electrode active material may include, for example, carbon such as nongraphitizing carbon, graphite-based carbon; metal composite oxide such as $Li_xFe_2O_3$ ($0{\le}x{\le}1$), $Li_xWO_2$ ($0{\le}x{\le}1$), $Sn_xMe_{1-x}Me'_yO_z$ (Me: Mn, Fe, Pb, Ge; Me': Al, B, P, Si, Groups 1, 2 and 3 elements in the periodic table, halogen; $0<x{\le}1$; $1{\le}y{\le}3$; $1{\le}z{\le}8$); lithium metals; lithium alloys; silicon-based alloys; tin-based alloys; silicon-based oxide such as SiO, SiO/C, $SiO_2$; metal oxide such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymer such as polyacetylene; Li-Co-Ni based materials, but is not limited thereto.

In an embodiment of the present disclosure, the electrode active material may be a positive electrode active material, and the positive electrode active material may be lithium nickel-manganese-cobalt oxide with partial substitution by aluminum $Li_{1+a}[Ni_bCo_cMn_dAl_e]_{1-a}O_2$ ($0{\le}a{\le}0.03$, $0.3{\le}b{\le}0.95$, $0<c<0.5$, $0<d<0.5$, $0.001{\le}e{\le}0.05$, b+c+d+e=1).

In another embodiment of the present disclosure, the positive electrode active material may be lithium manganese oxide, lithium metal ferrophosphate; lithium nickel-manganese-cobalt oxide; or a mixture thereof.

In an embodiment of the present disclosure, the binder polymer is not limited to a particular type and may include those that may be fibrillated in the following manufacturing method, in particular, in the process of making the mass of mixture. The fibrillation refers to breakdown and segmentation of a polymer, and for example, may be performed using a mechanical shearing force. The fibrillated polymer fibers are loosened on the surface into microfibers (fibrils).

Non-limiting examples of the binder polymer may include polytetrafluoroethylene (PTFE), polyolefin or a mixture thereof, specifically may include polytetrafluoroethylene (PTFE), and more specifically, may be polytetrafluoroethylene (PTFE). Specifically, the polytetrafluoroethylene (PTFE) may be included in an amount of 60 wt% or more based on the total weight of the binder polymer. Meanwhile, in this instance, the binder material may further comprise at least one of polyethylene oxide (PEO), polyvinylidene fluoride (PVdF), polyvinylidene fluoride-cohexafluoropropylene (PVdF-HFP) or polyolefin-based polymer.

In an embodiment of the present disclosure, the electrode active material layer may further comprise a conductive material. In an embodiment of the present disclosure, the conductive material may be included in the electrode mixture powder and introduced into the electrode active material layer.

The conductive material is not limited to a particular type and may include any material having conductive properties while not causing any chemical change to the corresponding battery, and may comprise, for example, graphite such as natural graphite or artificial graphite; carbon black, acetylene black, ketjen black, channel black, furnace black, lamp black, thermal black; conductive fibers such as carbon fibers or metal fibers; metal powder such as aluminum, nickel powder, fluorocarbon; conductive whiskers such as zinc oxide, potassium titanate; conductive metal oxide such as titanium oxide; and conductive materials such as polyphenylene derivatives, but specifically, for uniform mixing of the conductive material and improved conductivity, may comprise at least one selected from the group consisting of activated carbon, graphite, carbon black and carbon nanotubes, and more specifically, carbon black.

In an embodiment of the present disclosure, the electrode active material may be, for example, included in an amount of 80 wt% or more, 90 wt% or more, or 85 wt% to 98 wt% based on the total weight of the electrode material mixture. More specifically, the electrode active material may be included in an amount of 90 wt% to 98 wt% or 95 wt% to 98 wt%.

In an embodiment of the present disclosure, the binder polymer may be, for example, included in an amount of 0.5 wt% to 20 wt%, 0.5 wt% to 10 wt% or 2 wt% to 15 wt% based on the total weight of the electrode material mixture. More specifically, the binder polymer may be included in an amount of 2 wt% to 10 wt% or 2 wt% to 5 wt%.

In an embodiment of the present disclosure, as described above, the electrode material mixture may further comprise the conductive material, and in this instance, the conductive material may be, for example, included in an amount of 0.1 wt% to 20 wt%, 0.5 wt% to 10 wt% or 0.5 wt% to 5 wt% based on the total weight of the electrode material mixture. More specifically, the conductive material may be included in an amount of 0.5 wt% to 3 wt%, or 1 wt% to 3 wt%.

In the present disclosure, the electrode active material layer is derived from the electrode film formed by compression of the electrode mixture powder produced from the electrode material mixture, and the ratio of amounts of the electrode materials may be included in the same range as the electrode active material layer.

In the step (S10), mixing for mixing the electrode materials is performed for uniform distribution of the electrode active material and the binder polymer, and optionally the conductive material, and since the constituent components are mixed in powder form, the method for mixing is not limited to a particular type and any method for simply mixing them may be used. However, since these methods are used to manufacture dry electrodes without using solvent, the mixing may be performed by dry mixing, and may be performed by putting the above-described materials into a blender or a supermixer.

In an embodiment of the present disclosure, in case that the mixing is performed in a blender, the mixing may be performed in the blender at 5,000 rpm to 20,000 rpm for 30 seconds to 20 minutes, specifically at 10,000 rpm to 15,000 rpm for 30 seconds to 5 minutes to ensure uniformity.

In another embodiment of the present disclosure, in case that the mixing is performed in a supermixer, the mixing may be performed in the supermixer at 500 rpm to 2,500 rpm, specifically 1,000 rpm to 2,000 rpm to ensure uniformity, and accordingly the process time may be adjusted.

Subsequently, the step (S20) of kneading the electrode material mixture at high temperature and low shear to obtain the mass of mixture is performed.

The step (S20) is the step of fibrillating the binder in the resulting mixture, and may be referred to as kneading.

In an embodiment of the present disclosure, low shear kneading may be performed to fibrillate the binder, and prevent granulation of the active material and breakage of the resulting fibers, but the step (S20) is not limited thereto.

In this instance, the kneading may be, for example, performed through a kneader, but is not limited thereto.

The kneading is the step of forming the mass of mixture containing 100% solids by binding or connecting the active material powder or the active material powder and the conductive material powder by fibrillation of the binder.

In an embodiment of the present disclosure, the kneading of the step (S20) may be performed at the speed of 10 rpm to 100 rpm for 1 minute to 30 minutes, and specifically at the speed of 20 rpm to 50 rpm for 3 minutes to 10 minutes.

In an embodiment of the present disclosure, the kneading of the step (S20) may be performed at the shear rate in a range between 10/s and 500/s for 1 minute to 30 minutes. More specifically, the shear rate may be in a range between 30/s and 100/s. Additionally, the kneading step may be performed at high temperature under the pressure that is equal to or higher than the atmospheric pressure, and more specifically, under the higher pressure than the atmospheric pressure.

In an embodiment of the present disclosure, in the step (S20), the kneading may be performed in a range between 70°C and 200°C, and specifically, in a range between 90°C and 180°C or between 90°C and 150°C. When the kneading is performed in the above-described temperature range, it may be preferred in terms of fibrillation of the binder, agglomeration by the kneading, easy to form a film in the subsequent calendaring and the mechanical properties of the fibrillated binder, but the present disclosure is not limited thereto.

In an embodiment of the present disclosure, in the step (S20), the kneading may be performed under the pressure that is equal to or higher than the atmospheric pressure, specifically 1 atm to 60 atm, or 1 atm to 30 atm, or 1 atm to 10 atm, 1.1 atm to 10 atm, 1.1 atm to 6 atm, or 1.1 atm to 3 atm. When the kneading is performed in the above-described pressure range, it may be preferred in terms of fibrillation of the binder and the mechanical properties of the fibrillated binder, but the present disclosure is not limited thereto.

As described above, in an embodiment of the present disclosure, the kneading may be preferably performed by the low shear mixing process at high temperature and pressure condition that is equal to or higher than the atmospheric pressure, rather than high shear mixing.

The step (S30) is the step of obtaining the electrode mixture powder by pulverizing the result of the step (S20), specifically the mass of mixture obtained through kneading. A strong pressure and high temperature process is required to directly shape the result of the step (S20), specifically the mass of mixture into a film. Accordingly, the density of the film may be too high or it may fail to obtain a uniform film, and thus the mass of mixture is pulverized to obtain an electrode powder, and the obtained powder is calendared.

In an embodiment of the present disclosure, the pulverization may be performed using a blender, or a grinder such as a cutter mill or a fine impact mill, but is not limited thereto.

In an embodiment of the present disclosure, in case that the pulverization is performed using a blender, the pulverization may be performed at the speed of 500 rpm to 20,000 rpm for 30 seconds to 10 minutes, and specifically at the speed of 1,000 rpm to 10,000 rpm for 30 seconds to 1 minute.

In another embodiment of the present disclosure, in case that the pulverization is performed using a cutter mill, the pulverization may be, specifically, performed at the speed of 500 rpm or less, for example, 400 rpm to 500 rpm, for 10 seconds to 60 seconds.

In still another embodiment of the present disclosure, in case that the pulverization is performed using an impact mill, the pulverization may be, specifically, performed at the speed of 3,000 rpm to 8,000 rpm, for example, 4,000 rpm to 7,000 rpm, for 10 seconds to 60 seconds.

In an embodiment of the present disclosure, when the pulverization is performed in the above-described condition, it may be preferred in terms of the size of the powder and granulation suppression, but the present disclosure is not limited thereto.

In an embodiment of the present disclosure, before the calendaring of the step (S40) after the step (S30), the method may further comprise (S31) sieving the pulverized electrode mixture powder. In the sieving step, the pulverized electrode mixture powder may be obtained by filtering out the electrode mixture powder having a predetermined size or more using a mesh having openings of a predetermined size or less.

Subsequently, in the step (S40), the electrode film is obtained by compaction shaping of the electrode mixture powder. In the present disclosure, the process of making the sheet type electrode film by compaction of the electrode mixture powder is referred to as a calendaring process. The electrode film may be prepared in a sheet shape having a predetermined thickness by the calendaring process. For example, the electrode film obtained through the step (S40) may have a strip shape having an aspect ratio of more than 1. In an embodiment of the present disclosure, the thickness of the electrode film obtained through the step (S40) may be 50 $\mu$m to 300 $\mu$m. More specifically, the thickness of the electrode film may be 50 $\mu$m to 200 $\mu$m, 50 $\mu$m to 150 $\mu$m, 50 $\mu$m to 100 $\mu$m, 60 $\mu$m to 90 $\mu$m, 70 $\mu$m to 85 $\mu$m, 70 $\mu$m to 80 $\mu$m, 70 $\mu$m to 75 $\mu$m, or 80 $\mu$m to 85 $\mu$m.

In an embodiment of the present disclosure, in case that the electrode active material contained in the electrode film comprises lithium nickel-manganese-cobalt oxide with partial substitution by aluminum $Li_{1+a}[Ni_bCo_cMn_dAl_e]_{1-a}O_2$ ($0 \leq a \leq 0.03$, $0.3 \leq b \leq 0.95$, $0 < c < 0.5$, $0 < d < 0.5$, $0.001 \leq e \leq 0.05$, $b+c+d+e=1$) as the positive electrode active material, the thickness of the electrode film may be, for example, 70 $\mu$m to 85 $\mu$m, 70 $\mu$m to 80 $\mu$m or 70 $\mu$m to 75 $\mu$m, but is not limited thereto.

In another embodiment of the present disclosure, in case that the electrode active material contained in the electrode film comprises lithium metal ferrophosphate (LFP) as the positive electrode active material, the thickness of the electrode film may be, for example, 110 $\mu$m to 120 $\mu$m, but is not limited thereto.

For example, the calendaring process may be performed by a calendaring method of feeding the electrode mixture powder into a calendaring machine and thermally compacting using a roll press(es) included in the calendaring machine. Additionally, the calendaring process may be performed by a roll-to-roll continuous process.

In an embodiment of the present disclosure, the calendaring machine may include a roll press section including two rollers arranged on opposite sides, and the electrode mixture powder may be compacted into a sheet shape through the roll press section. In an embodiment of the present disclosure, a plurality of roll press sections may be continuously arranged to compact the electrode film multiple times. The number of roll press sections may be appropriately adjusted, taking into account the thickness of the electrode film or the roll press ratio.

FIG. 1 is a diagram schematically showing the calendaring process 100 according to an embodiment of the present disclosure. Referring to FIG. 1, the pressing of the electrode mixture powder 120 is performed multiple times by the calendaring machine including the roll press sections continuously arranged with the two calendaring rollers 110 present on opposite sides to make the electrode film 130. As described above, since the electrode film is made without using a solvent, it may be referred to as a dry electrode film.

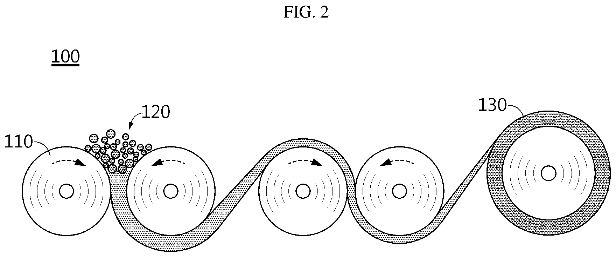

FIG. 2 is a diagram schematically showing the calendaring process 100 according to another embodiment of the present disclosure. Referring to FIG. 2, the pressing of the electrode mixture powder 120 is performed multiple times by the calendaring machine including the roll press sections arranged spaced apart at a predetermined distance with the two calendaring rollers 110 present on opposite sides to make the electrode film 130.

Meanwhile, the rotational speed ratio of the two rollers of each roll press section may be, independently, appropriately controlled within a range between 1:1 and 1:10. For example, the rotational speed ratio of the two rollers of at least one roll press section is controlled to 1:1 to 1:3. Additionally, the temperature of the rollers of each roll press section may be independently controlled in a range between 50°C and 250°C. The electrode film may be made by the calendaring process.

In an embodiment of the present disclosure, as the gap between the two rollers of the roll press section is narrower, the compaction pressure is higher, and thus the porosity of the electrode film made by calendaring may be lower. Accordingly, the calendaring pressure may be adjusted by adjusting the gap between the two rollers or the roller size according to the desired porosity and thickness of the electrode film.

In an embodiment of the present disclosure, the calendaring of the step (S40) may be performed by the single roll press section one time, or may be performed by the multiple roll press sections two or more times.

In an embodiment of the present disclosure, the number of times the calendaring of the step (S40) is, for example, performed under the pressure of 100 kg/cm or more may include at least one. Preferably, in case that the pressing of the electrode mixture powder is performed multiple times in the calendaring process of the step (S40), as the number of repetition of the pressing increases, the pressing may be performed under lower pressure. In this instance, the pressure at the last pressing, i.e., the lowest pressure in the calendaring process may be preferably 100 kg/cm or more, and it may be favorable for the manufacture of the electrode film, but the present disclosure is not limited thereto.

In an embodiment of the present disclosure, the electrode active material used to make the electrode film may comprise, for example, lithium nickel-manganese-cobalt-aluminum. The lower limit of the calendaring pressure may change depending on the type of the electrode active material used to make the electrode film, and the present disclosure is not limited thereto.

Accordingly, the porosity of the electrode film (i.e., the electrode film before lamination) made by calendaring may be 35vol% or less. Specifically, the porosity of the electrode film obtained through the step (S40) may be 35vol% or less, 30vol% or less, and more specifically 10vol% to 35vol%, 15vol% to 30vol%, 20vol% to 30vol%, 23vol% to 26vol% or 22vol% to 24vol%.

In an embodiment of the present disclosure, the number of times the calendaring of the step (S40) is, for example, performed under the pressure of 100 kg/cm or more may include at least one. Preferably, as described above, in case that pressing is performed multiple times in the calendaring process, the pressure at the last pressing may be 100 kg/cm or more, but the present disclosure is not limited thereto.

In an embodiment of the present disclosure, the calendaring of the step (S40) may be, for example, performed under the pressure of 500 kg/cm or less in the above-described pressure range, but is not limited thereto.

In an embodiment of the present disclosure, the calendaring of the step (S40) may be, for example, performed in a range between 100 kg/cm and 500 kg/cm, for example, 200 kg/cm and 300 kg/cm. Alternatively, to reduce the porosity of the electrode film obtained through calendaring and lower the compression ratio in the lamination step, the calendaring may be performed under the pressure of 300 kg/cm to 500 kg/cm, specifically 400 kg/cm to 500 kg/cm, 400 kg/cm to 450 kg/cm or 415 kg/cm to 450 kg/cm.

In an embodiment of the present disclosure, the degree of crystallinity of the binder polymer in the electrode film made by the calendaring process as described above may be controlled to 10% or less, or less than 10%. More specifically, the degree of crystallinity of the binder polymer in the electrode film made by the calendaring process may be 5% or less, specifically 1% or less, or 0%. In case that the degree of crystallinity of the binder polymer in the electrode film is controlled to 10% or less, the flexibility of the electrode film increases, thereby preventing breaking or cracking during winding and storage or unwinding. Additionally, as flexibility increases, the mechanical strength such as tensile strength and tensile elongation may be improved, but the present disclosure is not limited thereto.

In the present disclosure, the degree of crystallinity (Xc) of the binder polymer may be measured through differential scanning calorimetry (DSC) on the basis of the temperature (peak temperature) at the time when the enthalpy of crystallization is at the maximum. Specifically, the degree of crystallinity is a percentage ratio obtained by dividing a melting enthalpy ($\triangle H_m$) value actually measured by DSC by a melting enthalpy ($\triangle Hm°$) value (the equilibrium heat of fusion) of a theoretically perfect crystal (degree of crystallinity 100%), and may be calculated by the following equation 4. Here, the melting enthalpy value of a theoretically perfect crystal in known polymers may be found in polymer handbook, and for unknown materials or newly synthesized materials, may be calculated by extrapolation by extending the degree of crystallinity of 2 or more.

[Equation 4]

$$Xc\,(\%) = (\triangle Hm \div \triangle Hm°)\times 100$$

According to an embodiment of the present disclosure, as described above, the porosity of the electrode film made through the calendaring process may be 35% or less.

Subsequently, (S50) the electrode active material layer is formed by laminating the resulting electrode film onto one or two surfaces of the current collector. Accordingly, the electrode is manufactured by adhering the electrode film to the current collector.

In an embodiment of the present disclosure, the current collector is not limited to a particular type and may include those having high conductivity without causing any chemical change to the battery, and may include, for example, stainless steel, aluminum, nickel, titanium, sintered carbon, copper or aluminum or stainless steel treated with carbon, nickel, titanium or silver on the surface. The current collector may have microtexture on the surface to increase the adhesion strength of the positive electrode active material, and may come in various forms, for example, a film, a sheet, a foil, a net, a porous body, a foam and a nonwoven.

In an embodiment of the present disclosure, the thickness of the current collector may be selected as necessary and is not limited to a specific range, but may be, for example, 5 $\mu$m to 50 $\mu$m, specifically 10 $\mu$m to 30 $\mu$m or 15 $\mu$m to 20 $\mu$m.

Additionally, in an embodiment of the present disclosure, the current collector may be coated with a conductive primer over the entire surface or part of the surface to reduce the resistance and improve the adhesion strength. Here, the conductive primer may comprise a conductive material and a binder, and the conductive material is not limited to a particular material and may include any material having conductive properties, and for example, carbon-based materials. The binder may comprise fluoride-based (including PVDF and PVDF copolymers) binders that dissolve in solvents, acrylic binders and aqueous binders.

To this end, in an embodiment of the present disclosure, before the lamination of the step (S50), the method may further comprise forming the primer layer on at least one surface of the current collector.

In an embodiment of the present disclosure, the lamination may be the step of rolling the electrode film to a predetermined thickness and attaching to the at least one surface of the current collector, or the current collector having the primer layer on the at least one surface. The lamination may be performed by lamination rolls, and in this instance, the lamination rolls may be maintained at the temperature in a range between room temperature (25°C) and 200°C, but is not limited thereto.

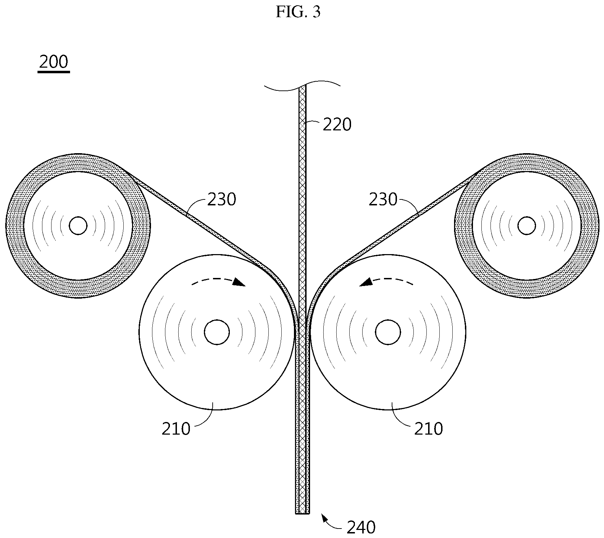

FIG. 3 is a diagram schematically showing the lamination process 200 according to an embodiment of the present disclosure. Referring to FIG. 3, the electrode film 230 is adhered to the current collector 220 to manufacture the electrode 240 and the lamination process is performed by pressing by the lamination rollers 210. Meanwhile, in the present disclosure, as described above, the electrode film attached to the current collector through lamination may be referred to as an electrode active material layer.

According to the above-described manufacturing method, the electrode is manufactured in which the compression ratio of the electrode film by lamination is 15% or less.

In an embodiment of the present disclosure, the compression ratio of the electrode film by lamination may be 1% to 15%, 1% to 12%, 1% to 10% or 1% to 5%.

In an embodiment of the present disclosure, the electrode satisfying the compression ratio of the electrode film may be manufactured with the flat surface of the uncoated portion.

According to another aspect of the present disclosure, there is provided an electrode comprising a current collector; and an electrode active material layer disposed on at least one surface of the current collector, and comprising an electrode active material and a binder polymer, wherein the binder polymer is fibrillated to bind the electrode active material, the electrode comprises a coated portion having the electrode active material layer and a current collector area in contact with the electrode active material layer; and an uncoated portion including a current collector area that is extended from two sides of the current collector area of the coated portion and is in noncontact with the electrode active material layer, the porosity of the electrode active material layer is 30% or less, and the surface of the uncoated portion is flat.

In an embodiment of the present disclosure, the porosity of the electrode active material layer may be, specifically, 30vol% or less, 5vol% to 30vol%, 10vol% to 30vol%, 15vol% to 30vol%, 20vol% to 30vol%, 20vol% to 25vol%, 25vol% to 30vol% or 23vol% to 26vol%.

In an embodiment of the present disclosure, the electrode may further comprise a primer layer between the current collector and the electrode active material layer, but the present disclosure is not limited thereto.

For details about the current collector, the coated portion, the uncoated portion, the electrode active material layer, the electrode mixture powder, the primer layer and the porosity, reference is made to the method for manufacturing the electrode.

In an embodiment of the present disclosure, the flat surface of the uncoated portion having no electrode active material layer on the at least one surface of the current collector may be, for example, identified through observation of the electrode appearance with the naked eye; measurement of the maximum length of an uneven shape on the surface of the uncoated portion or the coated portion.

For example, in an embodiment of the present disclosure, in case that the appearance of the electrode is observed with the naked eye, when a wrinkle is not observed in the uncoated portion, the surface of the uncoated portion may be said to be flat.

In an embodiment of the present disclosure, "the surface of the uncoated portion is flat" may represent that a visually observable bend is not found on the surface of the area of the current collector in which the electrode active material layer is not present. Alternatively, the height of the bend on the surface of the uncoated portion and/or the coated portion may be 2 mm or less.

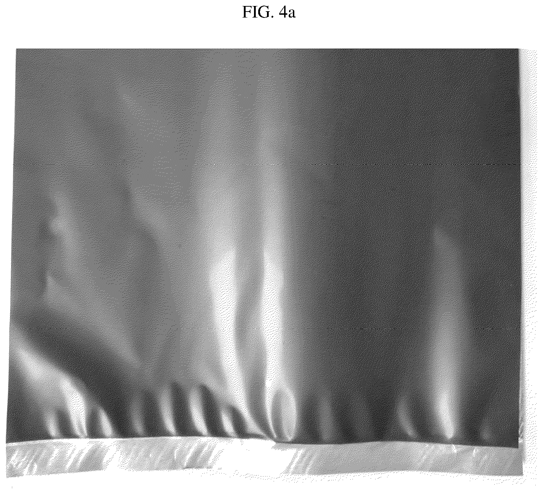

FIG. 4a is an image showing the electrode having the visually observable bend on the surface of the uncoated portion and the coated portion. Referring to FIG. 4a, it is found that the electrode having the nonflat uncoated portion is wrinkled in the coated portion.

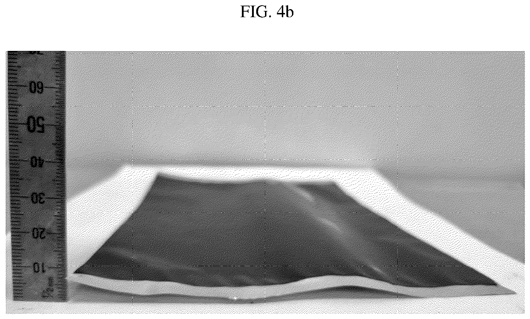

FIG. 4b is an image showing the bend of the electrode shown in FIG. 4a when observed from the side, and referring to FIG. 4b, the electrode having the nonflat surface of the uncoated portion may be defined as the electrode having the maximum length of the bend of more than 2 mm.

Accordingly, according to an embodiment of the present disclosure, the electrode having the maximum length of the bend of 2 mm or less may be defined as the electrode having the flat surface of the uncoated portion.

In an embodiment of the present disclosure, when the compression ratio of the electrode film according to the above Equation 1 is 15% or less, the surface of the uncoated portion may be said to be flat.

In an embodiment of the present disclosure, when the length expansion ratio of the electrode film according to the above Equation 2 is 4% or less, the surface of the uncoated portion may be said to be flat.

In an embodiment of the present disclosure, when the porosity ratio of the electrode film according to the above Equation 3 is 100% to 140%, the surface of the uncoated portion may be said to be flat.

As described above, since the electrode according to another aspect of the present disclosure is free of wrinkles in the uncoated portion, it may be possible to prevent bias in the electrode in the electrode assembly process or reduce winding defects. Accordingly, it may be possible to manufacture the electrode without a process for preventing wrinkles in the uncoated portion, thereby remarkably reducing defects in the electrode, and simplifying the process of manufacturing the electrode and battery.

According to another aspect of the present disclosure, there is provided an electrochemical device comprising a positive electrode; a negative electrode; and a separation layer interposed between the positive electrode and the negative electrode, wherein at least one of the positive electrode or the negative electrode is the above-described electrode.

In an embodiment of the present disclosure, the separation layer may be a separator or a solid electrolyte membrane.

The electrochemical device include any type of device in which electrochemical reaction occurs, and specific examples may include any type of primary and secondary batteries, fuel cells, solar cells or capacitors such as supercapacitors. In particular, among the secondary batteries, lithium secondary batteries including lithium metal secondary batteries, lithium ion secondary batteries, lithium polymer secondary batteries or lithium ion polymer secondary batteries are preferred.

The detailed structure of the electrochemical device is well known, and its description is omitted.

The electrochemical device according to the present disclosure may be included as a unit battery in the energy storage system, but the use of the present disclosure is not limited thereto.

The detailed structure of the energy storage system is well known, and its description is omitted.

Hereinafter, the present disclosure will be described in more detail through examples, and the following examples are provided by way of illustration and the scope of the present disclosure is not limited thereto.

**[Manufacture of electrode]**

Example 1

96 wt% of lithium nickel cobalt manganese aluminum oxide (NCMA, $Li[Ni_{0.87}Co_{0.87}Mn_{0.07}Al_{0.01}]O_2$) as a positive electrode active material, 1 wt% of carbon black as a conductive material and 3 wt% of polytetrafluoroethylene (PTFE) as a binder polymer were put into a blender and mixed at 10,000 rpm for 1 minute to prepare a mixture. The temperature of a kneader was stabilized to 150°C, the mixture was put into the kneader, and the kneader worked under the pressure of 1.1atm at the speed of 50 rpm for 5 minutes to obtain a mass of mixture. The mass of mixture was put into the blender, pulverized at 10,000 rpm for 40 seconds, and sieved using a mesh having 1 mm openings to obtain an electrode mixture powder.

Subsequently, the electrode mixture powder was put into a lab calendar (roll diameter: 200 mm, roll temperature: 100°C, 20 rpm) to perform a calendaring process in a repeated manner so that the porosity is 35vol% or less, and in this instance, the calendaring process was performed under the pressure between rolls of 221 kg/cm at the last calendaring to make an electrode film. In this instance, the thickness of the resulting electrode film was 82 $\mu$m, the porosity (%) was 31vol%, the loading amount was 5.11 mAh/cm$^2$.

A primer layer forming slurry was applied to an aluminum foil and dried to form a primer layer on the current collector. The primer layer comprises carbon black and a PVDF binder at a 1:2 weight ratio. Additionally, a lamination process was performed using a roll press that is maintained at room temperature to laminate two electrode films onto two surfaces of the aluminum foil (average thickness: 19 $\mu$m) having the primer layer so that the porosity of an electrode active material layer is 30% or less, to manufacture an electrode having the electrode active material layer on two surfaces of the current collector by the lamination of the electrode film onto the current collector. In this instance, the thickness of the electrode film laminated onto the current collector, i.e., the electrode active material layer was 75 $\mu$m, the porosity (%) was 25.9 vol%, and the loading amount was 5.05 mAh/cm$^2$.

Example 2

An electrode film was made by the same method as example 1 except that the pressure between rolls at the last calendaring was 264 kg/cm. In this instance, the thickness of the electrode film after calendaring was 81 $\mu$m, the porosity (%) was 30.1 vol%, and the loading amount was 5.11 mAh/cm$^2$.

Subsequently, an electrode was manufactured by lamination by the same method as example 1. In this instance, the thickness of the electrode film laminated onto the current collector, i.e., the electrode active material layer was 72 $\mu$m, the porosity (%) was 23.1 vol%, and the loading amount was 5.0 mAh/cm$^2$.

Example 3

An electrode film was made by the same method as example 1 except that the pressure between rolls at the last calendaring was 415 kg/cm. In this instance, the thickness of the electrode film after calendaring was 74 $\mu$m, the porosity (%) was 23.5 vol%, and the loading amount was 5.11 mAh/cm$^2$.

Subsequently, an electrode was manufactured by lamination by the same method as example 1. In this instance, the thickness of the electrode film laminated onto the current collector, i.e., the electrode active material layer was 72 $\mu$m, the porosity (%) was 23.0 vol%, and the loading amount was 5.07 mAh/cm$^2$.

Comparative example 1

An electrode film was manufactured by the same method as example 1, and a calendaring process was performed under the pressure between rolls of 115 kg/cm at the last calendaring so that the porosity is higher than 35 vol%. In this instance, the thickness of the electrode film before lamination immediately after calendaring was 92 $\mu$m, the porosity (%) was 37.2 vol%, and the loading amount was 5.21 mAh/cm$^2$.

Subsequently, an electrode having an electrode active material layer on two surfaces of a current collector was manufactured by performing lamination to the similar thickness and porosity to the electrode manufactured according to example 1 by the same method as example 1. In this instance, the thickness of the electrode film (the electrode active material layer) laminated onto the current collector was 74 $\mu$m, the porosity (%) was 26.0 vol%, the loading amount was 4.96 mAh/cm$^2$.

Comparative example 2

An electrode film was made by the same method as example 1 under the pressure between rolls of 210 kg/cm at the last calendaring, so that the thickness of the electrode film was 83 ,urn, the porosity (%) was 31.2 vol%, and the loading amount was 5.15 mAh/cm$^2$.

Subsequently, an electrode was manufactured by lamination by the same method as example 1. In this instance, the electrode was manufactured by adjusting the lamination pressure so that the thickness of the electrode film (the electrode active material layer) laminated onto the current collector was 68 $\mu$m, the porosity (%) was 19.2 vol%, and the loading amount was 4.93 mAh/cm$^2$.

Comparative example 3

An electrode film was made by the same method as example 1 under the pressure between rolls of 85 kg/cm at the last calendaring of the calendaring process so that the porosity is more than 35 vol%. In this instance, the thickness of the electrode film before lamination immediately after calendaring was 95 $\mu$m, the porosity (%) was 39.8 vol%, and the loading amount was 5.16 mAh/cm$^2$.

Subsequently, an electrode was manufactured by lamination to the similar thickness and porosity to the electrode manufactured according to example 1 by the same method as example 1. In this instance, the thickness of the electrode film (the electrode active material layer) laminated onto the current collector was 76 $\mu$m, the porosity (%) was 29.0 vol%, and the loading amount was 4.87 mAh/cm$^2$.

**[Evaluation of properties]**

Measurement of thickness

The thickness of the electrode film was measured using a thickness measurement instrument (Mitutoyo, VL-50S-B).

Evaluation of compression ratio

For the manufactured electrode, the compression ratio of the electrode film was evaluated according to the following Equation 1.

[Equation 1]

$$\text{Compression ratio (\%)} = [(T_B - T_A)/T_B] * 100$$

In the above Equation 1, $T_A$ denotes the thickness of the electrode film (the electrode active material layer) after lamination, and $T_B$ denotes the thickness of the electrode film before lamination.

Evaluation of length expansion ratio

For the manufactured electrode, the length expansion ratio of the electrode film was evaluated according to the following Equation 2.

[Equation 2]

$$\text{Length expansion ratio (\%)} = [(L_A - L_B)/L_B] * 100$$

In the above Equation 2, $L_A$ denotes the length of the electrode film (the electrode active material layer) after lamination, and $L_B$ denotes the length of the electrode film before lamination.

Measurement of porosity

The apparent density of only the electrode film was measured by subtracting the volume and weight of the current collector from the volume and weight of the manufactured electrode, and the porosity of the electrode film before and after lamination was measured according to the following equation using the actual density calculated based on the actual density and composition of each component.

Evaluation of porosity ratio

For the manufactured electrode, the porosity ratio was evaluated according to the following Equation 3.

[Equation 3]

$$\text{Porosity ratio (\%)} = P_B / P_A * 100$$

In the above Equation 3, $P_A$ denotes the porosity of the electrode film (the electrode active material layer) after lamination, and $P_B$ denotes the porosity of the electrode film before lamination.

Evaluation of wrinkles in uncoated portion

For the manufactured electrode, wrinkles in the uncoated portion, i.e., flatness of the uncoated portion were evaluated through appearance observation with the naked eye.

In this instance, in case that wrinkles are clearly observed on the uncoated portion, it is evaluated that the uncoated portion is 'wrinkled', and in case that wrinkles are not observed by observation with the naked eye, it is evaluated that the uncoated portion is 'wrinkle-free'.

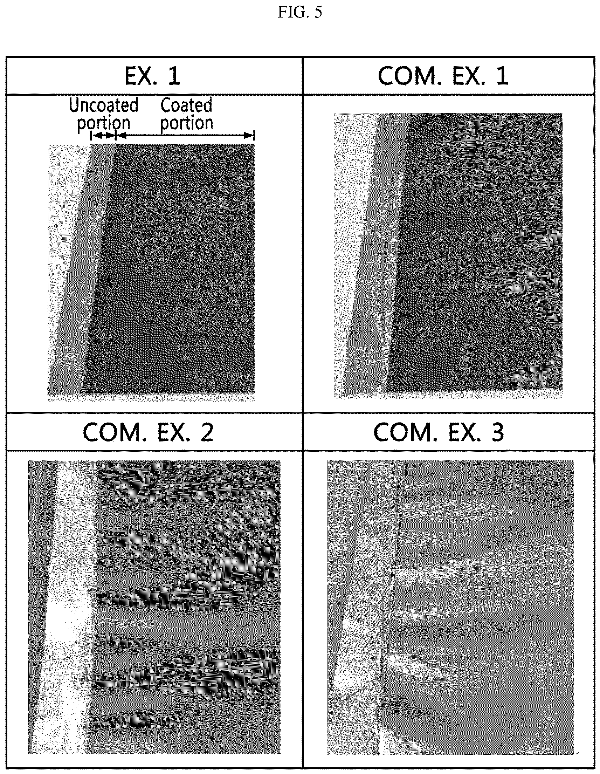

FIG. 5 is an image showing the appearance of the manufactured electrode of example 1 and comparative example 1.

The following Table 1 summaries the properties of the electrodes manufactured according to examples 1 to 3 and comparative examples 1 to 3.

[Table 1]

| Classification | Before lamination (properties of electrode film) | | After lamination (properties of electrode film) | | Compression ratio (%) | Length expansion ratio (%) | Porosity ratio (%) | Wrinkles in uncoated portion |
|---|---|---|---|---|---|---|---|---|
| | Thickness ($\mu$m) | Porosity (vol%) | Thickness ($\mu$m) | Porosity (vol%) | | | | |
| Example 1 | 82 | 31.0 | 75 | 25.9 | 8.5 | 1.2 | 120 | wrinkle-free |
| Example 2 | 81 | 30.1 | 72 | 23.1 | 10.9 | 2.5 | 130 | wrinkle-free |
| Example 3 | 74 | 23.5 | 73 | 23.0 | 1.4 | 0.1 | 102 | wrinkle-free |
| Comparative example 1 | 92 | 37.2 | 74 | 26.0 | 19.5 | 4.8 | 143 | wrinkled |
| Comparative example 2 | 83 | 31.2 | 68 | 19.2 | 18.1 | 4.2 | 163 | wrinkled |
| Comparative example 3 | 95 | 39.8 | 76 | 29.0 | 20 | 5.7 | 137 | wrinkled |

According to Table 1 and FIG. 5, it was confirmed that the electrodes of examples 1 to 3 having the compression ratio of 15% or less were wrinkle-free in the uncoated portion, while the electrodes of comparative examples 1 to 3 having the compression ratio of more than 15% were wrinkled in the uncoated portion. In particular, referring to FIG. 5, it was confirmed that the electrode of comparative example 2 had the porosity of 35vol% or less before lamination, but due to the high porosity ratio, strong wrinkles occurred at the boundary between the uncoated portion and the coated portion, and the coated portion was wrinkled. It was confirmed that in the case of the electrode of comparative example 3, the porosity after lamination was 30 vol% or less and the porosity ratio was 140% or less, but the porosity before lamination was 35 vol% or more, the compression ratio and the length expansion ratio were high as more than 15% and more than 4%, respectively, strong jamming occurred in the electrode film during lamination, and as a consequence, wrinkles in the horizontal direction of the electrode and wrinkles at the boundary between the uncoated portion and the coated portion occurred especially strongly.

In addition, it was confirmed that in the case of example 3 in which the electrode film was obtained under higher pressure in the calendaring step, the electrode film was wrinkle-free by reducing the compression ratio of the lamination step down to 1% or less to lower the length expansion ratio and the porosity ratio.

While the present disclosure has been hereinabove described with reference to the examples and drawings, it is obvious to those skilled in the art that a variety of modifications and change may be made in the scope of the present disclosure based on the foregoing description.

[Description of Reference Numerals]

100: Calendaring process
110: Calendaring roller
120: Electrode mixture powder
130: Electrode film
200: Lamination process
210: Lamination roller
220: Current collector
230: Electrode film
240: Electrode

**Claims**

1. A method for manufacturing an electrode, comprising:

(S10) mixing an electrode material comprising an electrode active material and a binder polymer to obtain a mixture;
(S20) kneading the mixture at high temperature low shear to obtain a mass of mixture;
(S30) pulverizing the mass of mixture at high shear to obtain an electrode mixture powder;
(S40) calendaring the electrode mixture powder to obtain an electrode film; and
(S50) laminating the electrode film onto at least one surface of a current collector to form an electrode active material layer,
wherein a compression ratio of the electrode film is 15% or less, and the compression ratio of the electrode film is defined by the following Equation 1:

[Equation 1]

$$\text{Compression ratio } (\%) = [(T_B - T_A) / T_B] * 100$$

wherein in the above Equation 1,

$T_A$ denotes a thickness of the electrode film (the electrode active material layer) after the lamination, and
$T_B$ denote a thickness of the electrode film before the lamination.

2. The method for manufacturing the electrode according to claim 1, wherein a length expansion ratio of the electrode film is 4% or less, and the length expansion ratio is defined by the following Equation 2:

[Equation 2]

$$\text{Length expansion ratio } (\%) = [(L_A - L_B)/L_B] * 100$$

wherein in the above Equation 2,

$L_A$ denotes a length of the electrode film (the electrode active material layer) after the lamination, and
$L_B$ denotes a length of the electrode film before the lamination.

3. The method for manufacturing the electrode according to claim 1, wherein a porosity ratio of the electrode film is 100% to 140%, and the porosity ratio of the electrode film is defined by the following Equation 3:

[Equation 3]

$$\text{Porosity ratio} (\%) = (P_B / P_A) * 100$$

wherein in the above Equation 3,

$P_A$ denotes a porosity of the electrode film (the electrode active material layer) after the lamination, and
$P_B$ denotes a porosity of the electrode film before the lamination.

4. The method for manufacturing the electrode according to claim 1, wherein a porosity of the electrode film before the lamination of the step (S50) is 35 vol% or less, and a porosity of the electrode film after the lamination of the step (S50) is 30 vol% or less.

5. The method for manufacturing the electrode according to claim 1, wherein the calendaring of the step (S40) is performed one time, or two or more times, and
wherein a number of times that the calendaring is performed under a pressure of 100 kg/cm or more includes at least one.

6. The method for manufacturing the electrode according to claim 1, wherein the kneading of the step (S20) is performed at a shear rate in a range between 10/s and 500/s for 1 minute to 30 minutes.

7. The method for manufacturing the electrode according to claim 1, wherein the kneading of the step (S20) is performed in a range between 70°C and 200°C under a pressure which is equal to or higher than atmospheric pressure.

8. The method for manufacturing the electrode according to claim 1, further comprising, before the lamination of the step (S50),
forming a primer layer on the at least one surface of the current collector.

9. An electrode, comprising:

a current collector; and
an electrode active material layer disposed on at least one surface of the current collector, and comprising an electrode active material, and a binder polymer,
wherein the binder polymer is fibrillated to bind the electrode active material,
wherein the electrode comprises a coated portion having the electrode active material layer and a current collector area in contact with the electrode active material layer; and an uncoated portion including a current collector area which is extended from two sides of the current collector area of the coated portion and is in noncontact with the electrode active material layer,
wherein a porosity of the electrode active material layer is 30 vol% or less, and
wherein a surface of the uncoated portion is flat.

10. The electrode according to claim 9, further comprising:
a primer layer between the current collector and the electrode active material layer.

11. An electrochemical device, comprising:

a positive electrode;
a negative electrode; and
a separation layer interposed between the positive electrode and the negative electrode,
wherein at least one of the positive electrode or the negative electrode is the electrode as defined in claim 9 or 10.

12. The electrochemical device according to claim 11, wherein the separation layer is a separator or a solid electrolyte membrane.

FIG. 1

FIG. 2

FIG. 3

FIG. 4a

FIG. 4b

FIG. 5

| EX. 1 | COM. EX. 1 |
| COM. EX. 2 | COM. EX. 3 |

<div align="center">

**INTERNATIONAL SEARCH REPORT**

</div>

| | International application No. |
|---|---|
| | **PCT/KR2023/005411** |

| A. | CLASSIFICATION OF SUBJECT MATTER |
|---|---|

**H01M 4/04**(2006.01)i; **H01M 4/13**(2010.01)i; **H01M 4/62**(2006.01)i; **H01M 4/66**(2006.01)i; **H01M 4/139**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/04(2006.01); B05D 3/12(2006.01); B05D 5/12(2006.01); H01G 11/06(2013.01); H01M 10/0525(2010.01); H01M 4/02(2006.01); H01M 4/13(2010.01); H01M 4/134(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 활물질(active material), 바인더(binder), 전단(shear), 혼련(mixing), 분쇄(crush), 캘린더링(calendering), 압축율(compression ratio), 공극률(porosity)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2342275 B1 (MAXWELL TECHNOLOGIES, INC.) 22 December 2021 (2021-12-22)<br>See claims 1, 8-10, 14 and 19; and paragraphs [0009], [0053] and [0058]-[0068]. | 1-12 |
| Y | JP 2007-026984 A (DAIDO METAL CO., LTD.) 01 February 2007 (2007-02-01)<br>See claim 2; and paragraphs [0013] and [0019]. | 1-12 |
| Y | KR 10-2018-0119158 A (MAXWELL TECHNOLOGIES, INC.) 01 November 2018 (2018-11-01)<br>See paragraph [0041]. | 1-8 |
| Y | KR 10-2019-0057966 A (LG CHEM, LTD.) 29 May 2019 (2019-05-29)<br>See claim 10. | 8,10 |
| A | KR 10-2006-0025230 A (MAXWELL TECHNOLOGIES, INC.) 20 March 2006 (2006-03-20)<br>See entire document. | 1-12 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 August 2023** | **07 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
|---|
| **PCT/KR2023/005411** |

| Patent document cited in search report | | | Publication date (day/month/year) | Patent family member(s) | | | Publication date (day/month/year) |
|---|---|---|---|---|---|---|---|
| KR | 10-2342275 | B1 | 22 December 2021 | CN | 106463267 | A | 22 February 2017 |
| | | | | CN | 113223860 | A | 06 August 2021 |
| | | | | EP | 3132481 | A1 | 22 February 2017 |
| | | | | EP | 3132481 | B1 | 20 October 2021 |
| | | | | EP | 4016666 | A1 | 22 June 2022 |
| | | | | ES | 2902211 | T3 | 25 March 2022 |
| | | | | JP | 2017-517862 | A | 29 June 2017 |
| | | | | JP | 2019-216101 | A | 19 December 2019 |
| | | | | JP | 6885864 | B2 | 16 June 2021 |
| | | | | JP | 6917418 | B2 | 11 August 2021 |
| | | | | KR | 10-2016-0145043 | A | 19 December 2016 |
| | | | | KR | 10-2021-0156340 | A | 24 December 2021 |
| | | | | KR | 10-2463477 | B1 | 04 November 2022 |
| | | | | MX | 2016013413 | A | 06 April 2017 |
| | | | | US | 10741843 | B2 | 11 August 2020 |
| | | | | US | 2015-0303481 | A1 | 22 October 2015 |
| | | | | US | 2020-0358100 | A1 | 12 November 2020 |
| | | | | WO | 2015-161289 | A1 | 22 October 2015 |
| JP | 2007-026984 | A | 01 February 2007 | JP | 4931383 | B2 | 16 May 2012 |
| | | | | US | 2007-0020514 | A1 | 25 January 2007 |
| KR | 10-2018-0119158 | A | 01 November 2018 | CN | 109074961 | A | 21 December 2018 |
| | | | | CN | 109074961 | B | 08 October 2021 |
| | | | | CN | 114068194 | A | 18 February 2022 |
| | | | | EP | 3424061 | A1 | 09 January 2019 |
| | | | | EP | 3424061 | B1 | 06 April 2022 |
| | | | | EP | 4036944 | A2 | 03 August 2022 |
| | | | | EP | 4036944 | A3 | 17 August 2022 |
| | | | | JP | 2019-512872 | A | 16 May 2019 |
| | | | | JP | 2022-003694 | A | 11 January 2022 |
| | | | | JP | 2023-058614 | A | 25 April 2023 |
| | | | | JP | 6952048 | B2 | 20 October 2021 |
| | | | | JP | 7227328 | B2 | 21 February 2023 |
| | | | | KR | 10-2559757 | B1 | 27 July 2023 |
| | | | | US | 10923295 | B2 | 16 February 2021 |
| | | | | US | 11587741 | B2 | 21 February 2023 |
| | | | | US | 2017-0256367 | A1 | 07 September 2017 |
| | | | | US | 2021-0193398 | A1 | 24 June 2021 |
| | | | | WO | 2017-151518 | A1 | 08 September 2017 |
| KR | 10-2019-0057966 | A | 29 May 2019 | CN | 111095616 | A | 01 May 2020 |
| | | | | CN | 111095616 | B | 03 February 2023 |
| | | | | EP | 3660958 | A1 | 03 June 2020 |
| | | | | EP | 3660958 | A4 | 02 December 2020 |
| | | | | EP | 3660958 | B1 | 03 May 2023 |
| | | | | KR | 10-2358448 | B1 | 04 February 2022 |
| | | | | US | 11545659 | B2 | 03 January 2023 |
| | | | | US | 2020-0403230 | A1 | 24 December 2020 |
| | | | | WO | 2019-103465 | A1 | 31 May 2019 |
| KR | 10-2006-0025230 | A | 20 March 2006 | CA | 2465086 | A1 | 22 October 2004 |
| | | | | CN | 100838999 | A | 27 September 2006 |
| | | | | CN | 100838999 | B | 18 April 2012 |

Form PCT/ISA/210 (patent family annex) (July 2022)

INTERNATIONAL SEARCH REPORT

Information on patent family members

International application No.

**PCT/KR2023/005411**

| Patent document cited in search report | Publication date (day/month/year) | Patent family member(s) | | Publication date (day/month/year) |
|---|---|---|---|---|
| | | CN | 102569719 A | 11 July 2012 |
| | | CN | 102569719 B | 05 April 2017 |
| | | EP | 1644136 A2 | 12 April 2006 |
| | | EP | 1644136 B1 | 29 August 2018 |
| | | EP | 2357043 A2 | 17 August 2011 |
| | | EP | 2357043 A3 | 05 October 2011 |
| | | EP | 2357044 A2 | 17 August 2011 |
| | | EP | 2357044 A3 | 05 October 2011 |
| | | EP | 2357045 A2 | 17 August 2011 |
| | | EP | 2357045 A3 | 05 October 2011 |
| | | EP | 2357046 A2 | 17 August 2011 |
| | | EP | 2357046 A3 | 05 October 2011 |
| | | EP | 2357046 B1 | 04 December 2013 |
| | | EP | 3467918 A1 | 10 April 2019 |
| | | JP | 2007-531245 A | 01 November 2007 |
| | | JP | 2011-109115 A | 02 June 2011 |
| | | JP | 4772673 B2 | 14 September 2011 |
| | | KR | 10-1211968 B1 | 13 December 2012 |
| | | US | 2005-0266298 A1 | 01 December 2005 |
| | | WO | 2005-008807 A2 | 27 January 2005 |
| | | WO | 2005-008807 A3 | 09 June 2005 |

Form PCT/ISA/210 (patent family annex) (July 2022)

**EP 4 513 580 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220049198